# EUROPEAN PATENT APPLICATION

(11) **EP 1 137 212 A1**
(43) Date of publication of application: **26.09.2001**
(21) Application number: 00963079.9
(22) Date of filing: 03.10.2000
(51) Int. Cl.: H04J 11/00

(54) **COMMUNICATION METHOD AND COMMUNICATION DEVICE**

(30) Priority: 04.10.1999 JP 28352999
(71) Applicant: MITSUBISHI DENKI KABUSHIKI KAISHA, Tokyo 100-8310 (JP)
(72) Inventor: MATSUMOTO, Wataru, c/o Mitsubishi Denki Kabushiki, Tokyo 100-8310 (JP)
(74) Representative: Pfenning, Meinig & Partner GbR
(86) International application number: JP0006882
(87) International publication number: WO0126268

(57) **Abstract**

The communication method comprises a transfer rate determining step of allowing a specific communication device functioning as a virtual master at the high-speed mode to carry out one-to-one training with a communication device that operates as a slave so that all the carriers that can be used in data communication and the number of bits that can be assigned to each carrier are determined and then determining the information related to the transfer rate individually by carrying out training in succession with all the other communication devices serving as slaves; a mapping information determining step of determining a common carrier that can be used in the respective communication devices and the number of common bits that can be assigned to the respective carriers as mapping information based upon the results obtained from the individual training processes; and a simultaneous informing step of giving the mapping information to all the communication devices simultaneously. Accordingly, it is possible to improve a noise resistant property, to provide a high-speed transfer rate, to properly alter communication modes in accordance with the state of a transmission path the condition of the communication path and the communication destination, and consequently to easily realize a high-speed N-to-N communication.

## Description

### TECHNICAL FIELD

The present invention relates a method of and device for communication use a multi-carrier modem system. More particularly, concerns a communication method which realizes data communication through the existing power lines by using a method such as the DMT (Discrete Multi Tone) modem system and the OFDM (Orthogonal Frequency Division Multiplex) modem system and a communication device capable of realizing such a communication method. However, the present invention is not intended to be limited to the communication device for carrying out power line communication through the DMT modem system, and is applicable to any communication device for carrying out cable communication and radio communication through normal communication lines by using the multi-carrier modem system and a single carrier modem system.

### BACKGROUND ART

The following description will discuss conventional communication methods. In recent years, public attention has been focused on "power line modems" that carry out communications by utilizing the existing power lines without installing new communication lines, in order to cut costs and effectively use the existing facilities. These power line modems make it possible to form a network over electric products installed the inside and outside of homes, buildings, factories, stores, etc., through power lines connected thereto; thus, various operations, such as controls of these products and data communications, become available.

At present, with respect to such power line modems, the application of the SS (Spread Spectrum) system has been proposed. For example, in the case when the SS system is used as the power line modem, on the sending side, after modulation of predetermined information, this is further subjected to a spread modulation process to widen its signal band to several tens to several thousand times by using "spread signs", and then transmitted. On the receiving side, this is subjected to a spread demodulation (inverse spread) process by using the same spread signs as the sending side, and the information is then demodulated.

However, in the conventional communication device using the SS system, for example, the following problems have arisen: since the spectrum that occupies all the given band is transmitted, it is difficult for this system to coexist with other communication systems; and the transfer rate is low with respect to the service band. Moreover, in the case when the existing power lines whose main purpose is not directed to data communication such as the power line modem are used for data communication, various equipment connected for supplying power form noise sources, and countermeasures have to be taken to deal with these noise sources.

Moreover, in the conventional communication device using the SS system, in the case when the service frequency for transmission is switched in response to the condition of electric waves, a synchronizing sequence is required between the communication device whose frequency is to be switched and a communication device on the receiving side. Then, the synchronization to the different frequency is achieved by executing this sequence on both of the sides. In such a case, one-to-one or one-to-N (integer of not less than 2) communications, for example, communications between abase station and a plurality of (or single) mobile stations, can be achieved on the base station side which controls the respective mobile stations so as to be synchronized; however, in the case of N to N communications, the synchronization is very difficult.

It is an object of this invention to provide a communication device, which, by using a multi-carrier modem system, makes it possible to improve noise resistance, to provide a high-speed transfer rate (high-speed mode), to alter communication modes (high-speed mode/low-speed mode) in accordance with the condition of the communication path and the communication destination, and also to readily achieve a N-to-N high-speed communication, and a communication device capable of achieving such a communication method.

### DISCLOSURE OF THE INVENTION

The communication method in accordance with one aspect of the present invention, which uses a multi-carrier modem system as the communication system, and properly alters communication modes to a high-speed mode or a low-speed mode in accordance with the condition of the communication path and the communication destination, is provided with a transfer rate determining step (corresponding to steps S4 to S8 in embodiments which will be described later) of: allowing a specific communication device functioning as a virtual master at the high-speed mode to carry out one-to-one training with a communication device that operates as a slave so that all the carriers that can be used in data communication and the number of bits that can be assigned to each carrier are determined as information related to the transfer rate, and then determining the information related to the transfer rate individually by carrying out training in succession with all the other communication devices serving as slaves; a mapping information determining step (corresponding to step S9) of allowing the specific communication device serving as the virtual master to determine a common carrier that can be used in the respective communication devices and the number of common bits that can be assigned to the respective carriers as mapping information based upon the results obtained from the individual training processes; and a simultaneous informing step (corresponding to step S10) of giving the mapping information to all the communication devices simultaneously, and in this arrangement, all the communication devices connected to transmission paths operate at the high-speed mode based upon the mapping information.

In the communication method, at the time of the high-speed mode in data communication between the communication devices serving as the slaves, if any communication device on the receiving side fails to receive data, the specific communication device serving as the virtual master relays the data to transmit the data to the communication device on the receiving side (steps S31 to S34, step S41, and step S42).

In the communication method, at the time of the high-speed mode in data communication between the communication devices serving as the slaves, if any communication device on the receiving side fails to receive data, instead of the specific communication device serving as the virtual master, the communication device on the sending side serves as a virtual master, and the communication device, which newly serves as the master device, executes the above-mentioned steps, and then again transmits the data that has not been received (corresponding to steps S51 to S55).

The communication device in accordance with another aspect of the present invention, which uses a multi-carrier modem system as the communication system, makes it possible to properly alter communication modes to a high-speed mode or a low-speed mode in accordance with the condition of the communication path and the communication destination; when it is allowed to serve as a specific communication device functioning as a virtual master at the high-speed mode, carries out one-to-one training with a communication device that operates as a slave so that it determines all the carriers that can be used in data communication and the number of bits that can be assigned to each carrier as information related to the transfer rate; then carries out training in succession with all the other communication devices serving as the slave with respect to the information related to the transfer rate; determines the commonly-used carrier among the communication devices and the commonly-used number of bits that can be assigned to each carrier as mapping information based upon the results obtained from the individual training; and simultaneously gives the mapping information to all the communication devices.

In the communication device, at the time of high-speed mode, in data communication between communication devices serving as slaves, if any communication device on the receiving side fails to receive data, the data is relayed and transmitted to the communication device on the receiving side.

In the communication device, at the time of high speed mode, in data communication between communication devices serving as slaves, if any communication device on the receiving side fails to receive data, the communication device on the sending side serves as a virtual master, and the communication device, which newly serves as the master device, executes the above-mentioned steps, and then again transmits the data that has not been received.

### BRIEF DESCRIPTION OF THE DRAWINGS

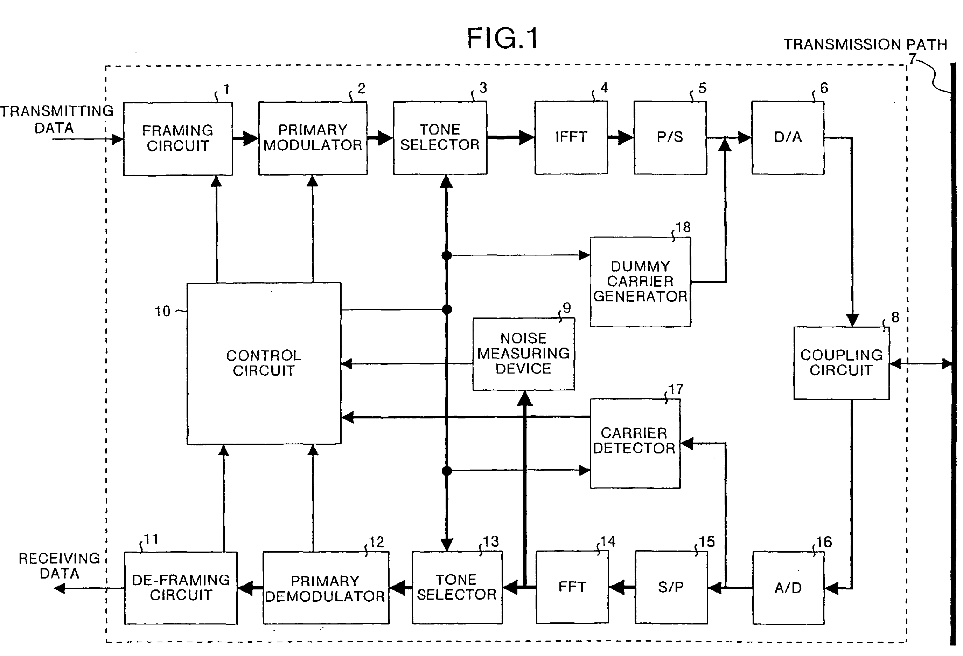

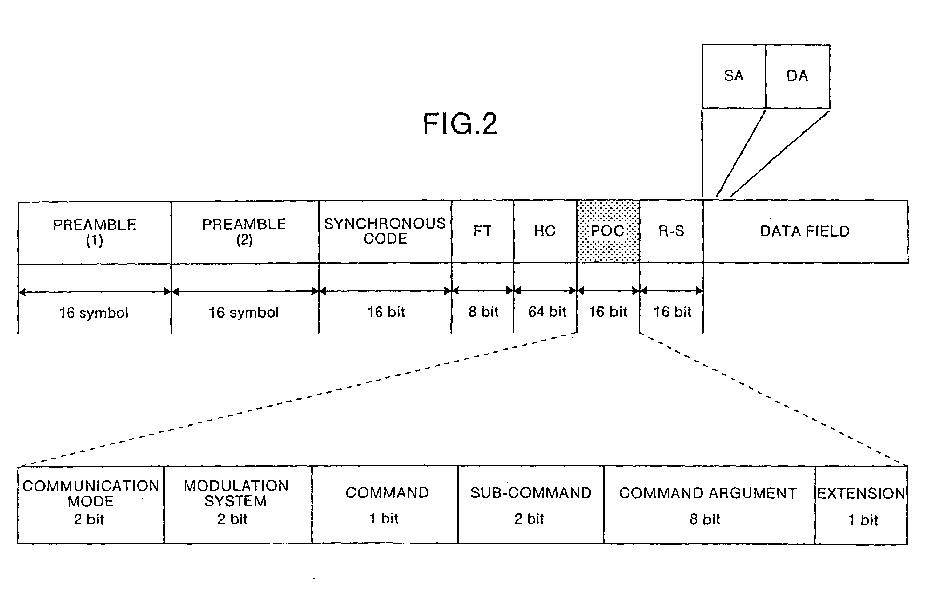

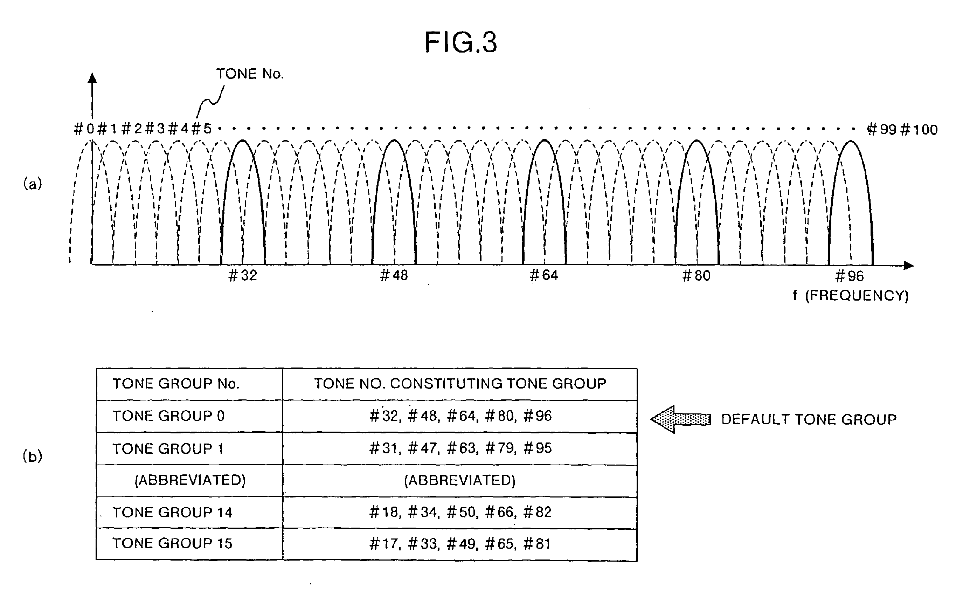

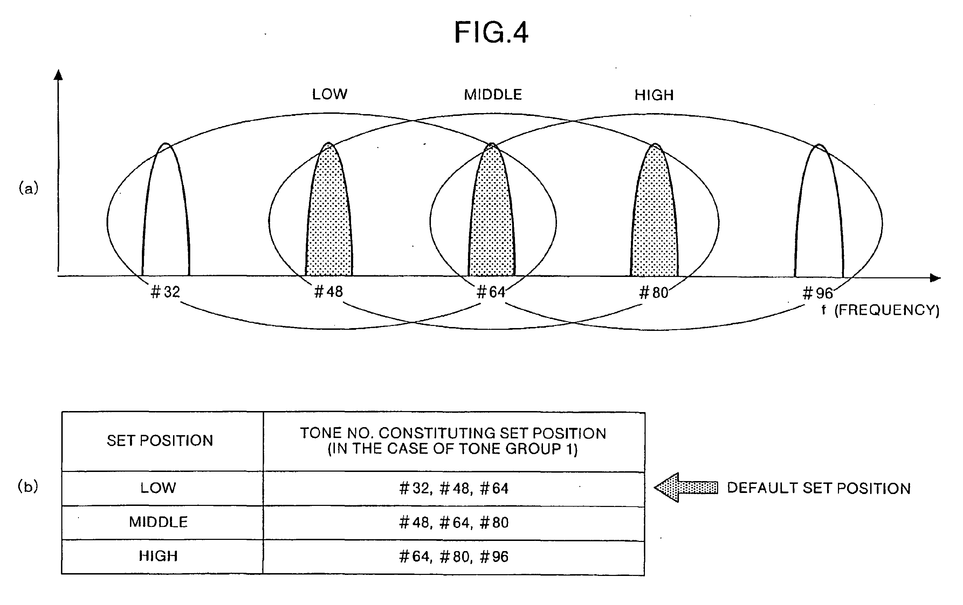

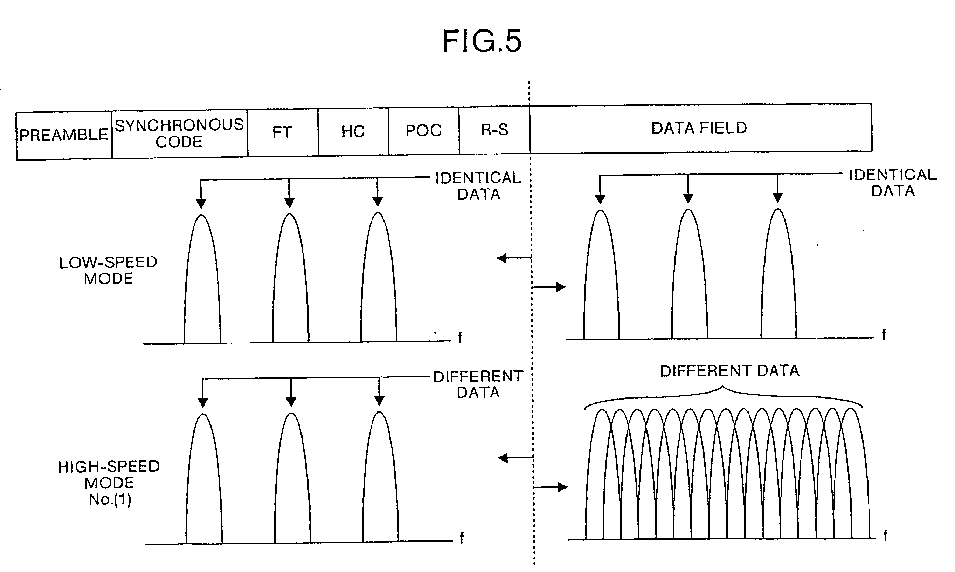

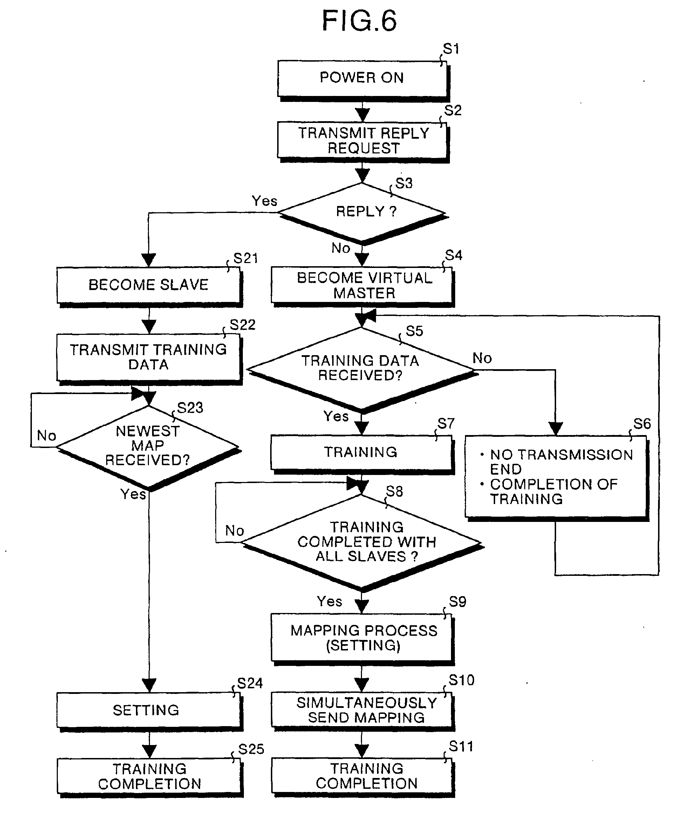

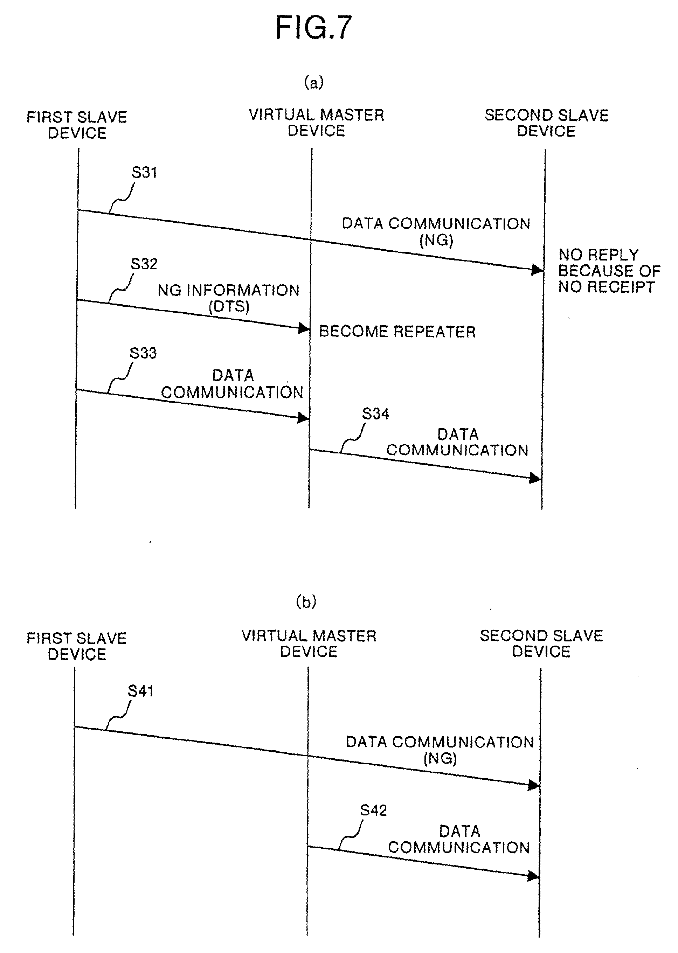

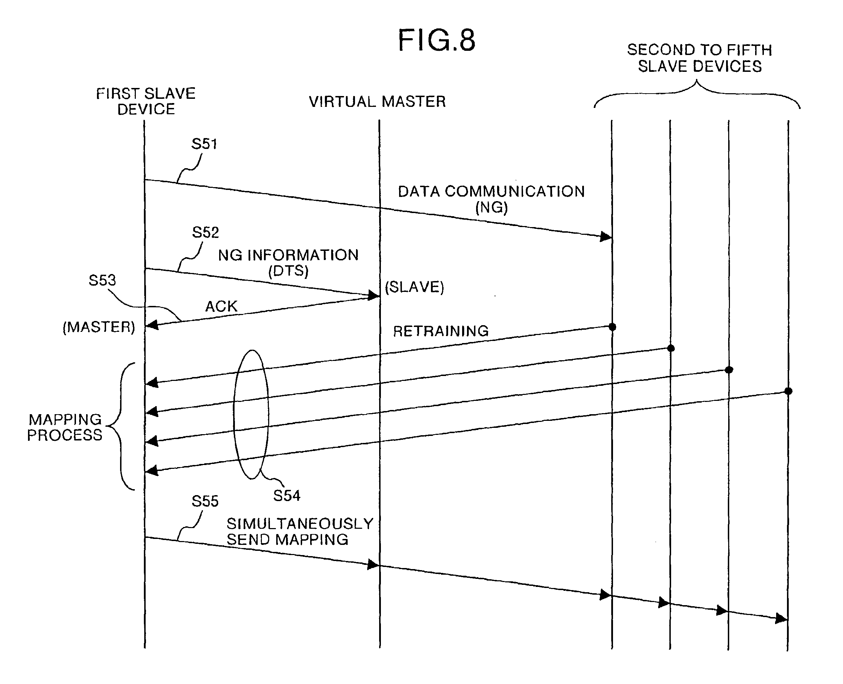

Fig. 1 is a drawing that shows the construction of a communication device in accordance with the present invention; Fig. 2 shows a drawing that shows the construction of a frame generated in a framing process, and the construction of a POC field in the frame; Fig. 3 is a drawing that shows the definition of a tone group; Fig. 4 is a drawing that shows the definition of a tone set within the tone group; Fig. 5 is a drawing that shows a communication method in each communication mode; Fig. 6 is a flow chart that shows a communication method of a first embodiment; Fig. 7 is a flow chart that shows a communication method of a second embodiment; and Fig. 8 is a flow chart indicating a communication method of a third embodiment.

### BEST MODE FOR CARRYING OUT THE INVENTION

Preferred embodiments of the method of and device for communication of the present invention will be explained by referring to the accompanying drawings. However, this invention is not intended to be limited by these embodiments . Moreover, in the following embodiments, an explanation will be specifically given of a "power line modem" for carrying out data communication by using the existing power lines; however, not limited to the power line modem, the communication device of the present invention is applicable to any communication device that carries out cable communication and radio communication through normal communication lines by using a multi-carrier modem system and a single-carrier modem system.

The communication device in accordance with the present invention adopts the multi-carrier modem system that has a higher noise resistant property and can achieve higher speeds as compared with the SS system, is allowed to properly alter communication modes (a high-speed mode/a low-speed mode) in accordance with the condition of the communication path and the communication destination, and makes it possible to easily achieve any of one-to-one, one-to-N and N-to-N communications at high speeds on communication paths to which a plurality of communication devices are connected.

Fig. 1 is a drawing that shows the construction of a communication device in accordance with the present invention. In Fig. 1, reference 1 is a framing circuit, 2 is a primary modulator, 3 is a tone selector, 4 is an Inverse Fast FourierTransform (IFFT) circuit, 5 is aparallel/serial conversion circuit (P/S), 6 is a digital/analog conversion circuit (D/A), 7 is a transmission path (power line), 8 is a coupling circuit, 9 is a noise measuring device, 10 is a control circuit, 11 is a de-framing circuit, 12 is a primary demodulator, 13 is a tone selector, 14 is a Fast Fourier Transform (FFT) circuit, 15 is a serial/parallel conversion circuit (S/P), 16 is an analog/digital conversion circuit (A/D), 17 is a carrier detector, and 18 is a dummy carrier generator. Further, a transmission system is constituted by the framing circuit 1, the primary modulator 2, the tone selector 3, the IFFT 4, the P/S 5 and the D/A6, and a receiving system is constituted by the A/D 16, the S/P 15, the FFT 14, the tone selector 13, the primary demodulator 12 and the de-framing circuit 11.

Basic operation of the communication device will now be explained. First, the following description will discuss the operation of the transmission system. For example, when transmission data is inputted through a data processing device (not shown) connected to the communication device (power line modem), the framing circuit 1 carries out a framing process shown in Fig. 2, and outputs the resulting frame to the primary modulator 2. Then, the primary modulator 2 modulates the frame thus received, for example, by using the DBPSK or DQPSK system indicated by primary modulation/demodulation system selecting information from the control circuit 10, and after encoding the same frame to each tone in the multi-carrier modulation system, outputs the resulting signal to the tone selector 3. Here, in the present embodiment, at the time of the low speed mode, as shown in Fig. 3 that will be described later, the same frame is encoded to all the five tones (hereinafter, referred to as a tone set), for example, tones #32, #48, #64, #80 and #96. In contrast, at the time of the high speed, respectively different frames are encoded to all the tones. In the following description, only the operation at the time of the low-speed mode will be discussed; however, the operation at the high-speed mode can be processed through the same sequence.

Thereafter, based upon the information from the control circuit 10, the tone selector 3, for example, selects three tones #48, #64 and #80 from the tone set, and outputs these to the IFFT 4. The IFFT 4 subjects the three tones #48, #64 and #80 thus received to an inverse Fourier transform so as to transform the frequency-axis data to time-axis data, and outputs these to the P/S 5.

The P/S 5 converts the parallel data outputted from the IFFT 4 to serial data, and further outputs the serial data to the D/A 6 where the serial data is finally subjected to a digital/analog conversion, and the resulting analog signal is transmitted through the coupling line 8 and the power line 7 to another communication device (not shown) that is connected to the power line 7.

As a result, as illustrated in Fig. 4 that will be described later, the identical multi-carrier data, which is placed on three tones having frequency intervals of 16 tones on the frequency axis, is outputted on the power line 7. Consequently, even when concentrated on a frequency band having noise, the three identical multi-carrier data having frequency intervals of 16 tones is transmitted to the communication device placed on the side receiving the data; therefore, it is possible to carry out data communication that is less susceptible to power line noise as compared with the single-carrier power-line communication because of the spaced intervals of the frequency. In contrast, when respectively different frames are encoded to all the tones, it is possible to achieve high speeds in the transfer rate.

Next, an explanation will be given of the operation of the receiving system. Here, for convenience of explanation, only one communication device is connected to the transmission path 7; therefore, the explanation is given by reference to the construction of the receiving system of Fig. 1. First, when multi-carrier data is transmitted from the transmission system as described above, the receiving system of another communication device carries out the operations reversed to those of the transmission system, thereby demodulating the data. More specifically, it acquires the three multi-carrier data sent from the communication device on the transmission side, and the A/D 16 carries out an analog/digital conversion. Successively, the carrier detector 17 detects carriers through carrier sensing and tone testing, and then establishes symbol synchronization. Then, the S/P 15 converts serial data that has been converted to digital data to parallel data, and outputs this to the FFT 14.

The FFT 14 subjects the parallel data to a Fourier transform so that the multi-carrier data on the time-axis is transformed to data on the frequency-axis, and outputs the resulting frequency-axis data to the tone selector 13 and the noise measuring device 9. Thereafter, the tone selector 13 selects three tones specified by the control circuit 10, for example, tones #48, #64 and #80, and outputs these to the primary demodulator 12, and the primary demodulator 12 demodulates the identical data in the three tones #48, #64 and #80 by using the primary modulation system specified by the primary modulation/demodulation system selection information from the control circuit 10.

Lastly, the de-framing circuit 11 generates receiving data by subjecting the primarily demodulated data to a de-framing process, and outputs the received data to an apparatus (not shown) connected to this communication device. Here, the de-framing process, which is a process reversed to the framing process by the framing circuit 1, refers to a process in which preambles (1), (2) and control codes are separated from the frames of the data that has been primarily demodulated, and only data fields are synthesized, that is, the received data is reconstructed to the shape of the originally transmitted data.

Fig. 2 is a drawing that shows the structure of a frame generated by the framing process of the framing circuit 1 and a POC (Power Line Communication Overhead Control Field) field in the frame. The frame shown in Fig. 2 is constituted by a preamble (1) field that is an area for carrier-detecting signals, a preamble (2) field that is an area for symbol-synchronizing signals, a synchronous code field that is an area for predetermined fixed codes, a Frame Type (FT) field that is an area for signals indicating the length of data fields, a House Code (HC) field that is an area for house-identifying codes, a POC field that is a control command area used in a physical layer, an R-S sign field that is an area for error correcting signs for FT, HC and POC, and data fields, and this frame is generated by the framing circuit 1, and after having been modulated through the above-mentioned process, this is outputted to the transmission path 7.

Moreover, the frames on the transmission path are received by all the communication devices connected to the transmission path, and in the case when, upon identification about HC, the data is coincident with its own HC, the control circuit 10 makes a decision that the data, transmitted on the transmission path, may be directed to its own address, and carries out error checking/correcting processes on the data by using RS (Reed Solomon) signs to recognize the contents thereof. Moreover, if not coincident with its own HC, it does not carry out the operation.

The POC is constituted by a 2-bit communication mode field for setting the communication speed (for example, a low-speed mode, a high-speed mode, etc.), a 2-bit modulation system field indicating selectable modulation systems (for example, DQPSK, DBPSK, DBPSK+time diversity, etc), a 1-bit command field indicating a control command (normal operation, modulated operation), a 2-bit sub-command indicating the functions of the control command, 8-bit command arguments indicating set information of the respective functions (tone group, set position, primary modulation system), and an extension bit of one bit, and this is used for carrying out processes such as tone shift, alteration of the primary modulation system, and alteration of the communication modes (low-speed mode/high-speed mode).

Fig. 3 is a drawing that shows the definition of tone groups used for data communication in the communication device shown in Fig. 1. For example, in the power line modem for carrying out power-line communications, as shown in (a), on the assumption of 80 (#17 to #96) tones having intervals of 4. 3125 kHz, a set of 5 tones selected with intervals of 16 is defined as a tone group, and 16 tone groups (tone groups #0 to #15) having tones #17 to #32 as starting points are further defined as shown in (b).

Moreover, Fig. 4 is a drawing that shows the definition of tone sets within the tone group. For example, among 5 tones constituting any tone group, a set of consecutive 3 tones is defined as a tone set. In other words, a set position of tone sets constituted by consecutive 3 tones on the low frequency side within each tone group is defined as a Low set position, and a set position of tone sets constituted by consecutive 3 tones on the high frequency side within each tone group is defined as a High set position, with a set position of the middle tone set being defined as a Middle position. Therefore, data communication at the time of the low-speed mode is carried out by using a tone set specified by a specific set position among specific set groups.

In addition to the above-mentioned basic operation, the communication device in the present embodiment has a function that can freely alter the communication mode (high-speed mode/low-speed mode) as shown in the aforementioned Fig. 2. More specifically, for example, in the case of a communication device capable of operating in both of the modes, that is, the low-speed mode and the high-speedmode, the respective mode is selectively switched so as to operate in accordance with the communication mode on the other communication side, and in the case of a communication device that operates only in the low-speed mode, or in the case of a communication device that operates only in the high-speed mode, it is allowed to operate only in the corresponding mode irrespective of the communication mode on the other communication side.

Next, a detailed explanation will be given of a communication method between communication devices in the case when communication devices having different specifications in the above-mentioned modes coexist in a network. Fig. 5 shows communication methods in the respective communication modes. For example, in the case when communication devices that operate only in the low-speed mode communicate with each other, the transmission system of the communication devices allocate the same data to the predetermined three tone set (for example, tone #48, #64 and #80) , and subjects this to a modulation process by using the DQPSK or DBPSK modulation system, and further to an IFFT process, thereby converting the frequency-axis data to the time-axis data.

In other words, at the time of the low-speed mode, as illustrated in Fig. 5, in the transmission system, the same frames are allocated to the three tones, and in this case, "Low speed" is set in the communication mode in the POC, and "Sender's ID" is set in SA (Souse Address), while "Receiver's ID" is set in DA (Destination Address) within the data field shown in Fig. 2.

On the other hand, each of the receiving systems of the respective communication devices, first, confirms the HC of the transmission frame as to whether or not the frame is transmitted to its own address. If it is transmitted to its own address, the receiving system confirms the communication mode within the POC so as to find that the data field in this frame is in an operable mode. In this case, the transmission system is operating in the low-speed mode, only the communication devices that are operable in the low-speedmode confirmthe DA, and if the frame is directed to their own address, the receiving system in the communication device receives the data field in the low-speed mode.

Next, for example, in the case when communication devices that operate only in the high-speed mode communicate with each other, the transmission system of the communication devices allocate the preamble, synchronous code, FT, HC, POC and R-S to predetermined three tone sets (for example, tone #32, #48, #64) with predetermined bits in succession, and further allocates the data field to all the tones (for example, tone #0 to tone #127) with predetermined bits in succession. Thereafter, the transmission system subjects this to a modulation process by using the DQPSK or DBPSK modulation system, and further to an IFFT process, thereby converting the frequency-axis data to the time-axis data.

In this manner, in the case of an operation in the high-speed mode, as illustrated in Fig. 5, the transmission system allocates data from the preamble to R-S to the three tones at the same speed as in the case of the low-speed mode in succession, and further allocates the data of the data field to all the tones respectively in succession. In this case, "High speed" is set in the communication mode in the POC, and "Sender's ID" is set in SA (Souse Address), while "Receiver's ID" is set in DA (Destination Address) within the data field shown in Fig. 2.

On the other hand, each of the receiving systems of the respective communication devices, first, confirms the HC of the transmission frame as to whether or not the frame is transmitted to its own address. If it is transmitted to its own address, the receiving system confirms the communication mode within the POC so as to find that the data field in this frame is in an operable mode. In this case, the transmission system is operating in the high-speed mode, only the communication devices that are operable in the high-speed mode confirm the DA, and if the frame is directed to their own address, the receiving system in the communication device receives the data field in the high-speed mode.

In this manner, in the communication device of the present embodiment, two kinds of communication modes are provided so that it is possible to achieve high-speed communication, and also to allow both communication devices capable of operating in the low-speed mode that are realized at low costs and communication devices capable of operating in the high-speed mode that are highly convenient to coexist in the same network.

Next, an explanation will be given of a case in which N-to-N communications are carried out in a system having a plurality of devices with the above-mentioned communication modes that are connected to the transmitting path 7. For example, a plurality of communication devices carry out N-to-N communications in the low-speed mode, each of the communication devices confirms the POC in the three tones that form the default tone set (DTS) or active tone set (ATS) so that it easily confirms the operation mode, the primary modulation system and the set information. Then, based upon these pieces of information, the same data having a specific number of bits (fixed) is allocated to the respective tones so that it is possible to easily achieve N-to-N communications. In other words, all the communication devices can easily communicate with the other communication devices.

Here, the ATS refers to a specific tone set (3 tones) within a specific tone group (5 tones) that is used in data communication, and the active tone refers to any one of three tones constituting the active tone set. Moreover, the DTS (in some cases, ATS = DTS) refers to the fixed tone set, for example, constituted by tone #48, #64 and #80, and the default tone refers to any one of three tones constituting the default tone set.

Moreover, in the case when a plurality of communication devices carry out N-to-N communications in the high-speed mode, each of the communication devices are allowed to easily find the operation mode, primary modulation system and set information by confirming the POC in the three tones constituting the default tone set (DTS), or the active tone set (ATS). However, as illustrated in Fig. 5, in the case of the high-speed mode, since different numbers of bits are allocated to all the tones in accordance with the state of the transmission path 7, that is, since the numbers of bits are allocated by taking into consideration influences of noise given to each tone, training needs to be executed among the communication devices so that mapping is carried out for each tone.

Therefore, the following description will discuss the mapping process in the N-to-N high-speed communication. Fig. 6 shows a communication method of a first embodiment by which the communication device of the present invention is operated, that is, a flow chart that shows a process (mapping process) for determining common tones that can be used among the communication devices and the common number of bits that can be used for the tones, through training. For example, upon application of power to a communication device connected to the transmission path 7 (step S1), this communication device puts a reply request on the DTS and transmits this to the other communication devices connected to the transmission path 7 (step S2). In other words, this request allows the other communication devices to confirm that their own devices are in the connected state.

Then, this communication device, in this state, waits for the reply (ACK) from any of the communication devices (step S3). In this case, for example, if no reply has not been given from any communication device within a predetermined time (step S3, NO), this communication device is allowed to serve as a virtual master for all the communication devices connected to the transmission path 7 (step S4), and waits for transmission of training data from any of the communication devices (step S5).

As a result, for example, if no training data is available (step S5, NO), the communication device serving as the virtual master makes a judgment that, at present, no other communication devices are connected to the transport path 7 (step S6) , and continues to wait for any communication device to be connected (step S5). In contrast, if it has received training data with a plurality of (or single) communication devices being connected (step S5, YES), the communication device carries out one-to-one training on the communication device that is the sender of the data, and determines usable tones (tones to which data field can be allocated) at the time of data communication in the high-speed mode, and the number of bits that can be used by the respective tones (step S7). In other words, it determines the fastest transfer rate in this one-to-one communication.

Thereafter, in the same manner, the communication device serving as a virtual master carries out training on all the other communication devices (step S8, NO), and upon completion of the training with all the communication devices (step S8, YES), based upon the results of the training, it executes a mapping process (step S9). In other words, based upon the results of training obtained from the individual training, it carries out processes for determining the common tones that can be used among the communication devices and the common number of bits that can be used for the tones.

More specifically, for example, in the case when the training results with respect to the first slave device are {tone#1 : 0 bit, tone#2 : 8 bits, tone#3 : 9 bits, tone #4 : 10 bits ...}, the training results with respect to the second slave are {tone#1 : 5 bits, tone#2 : 10 bits, tone#3 : 9 bits, tone #4 : 7 bits ...} and the training results with respect to the third slave are (tone#1 : 8 bits, tone#2 : 10 bits, tone#3 : 6 bits, tone #4 : 8 bits ...}, the virtual master device determines that the usable common tone are tone #2, tone #3, tone #4 ... (except for tone #1), and that the common numbers of bits are 8 bits, 6 bits, 7 bits ...(the smallest values respectively) on a tone basis.

Lastly, the communication device serving as a virtual master simultaneously gives the mapping information thus determined to all the communication devices (step S10), thereby completing the training (step S11).

Here, in the process of step S3, if there is a reply from any communication device within the predetermined time (step S3, NO); then, this communication device recognizes that there is a virtual master, and comes to serve as a slave in the communication devices connected to the transmission path 7 (step S21). Then, the communication device, which has become a slave, transmits training data to the virtual master (step S22), and in this state, it waits for arrival of the newest mapping information (step S23, NO).

Thereafter, the communication device serving as a slave receives mapping information from the virtual master (step S23, YES), and the information is set at the common transfer rate in the high-speed mode (step S24), thereby completing the training (step S25).

In this manner, by using the multi-carrier modem system, the present embodiment makes it possible to improve a noise resistant property, to provide high-speeds in the transfer rate (high-speed mode), and also to properly alter communication modes (high-speed mode/low-speed mode) in accordance with the state of the transmission path and the other communication side, and at the time of application of power, it also allows communication devices connected to the transmission path 7 to operate either a virtual master or a slave so that the communication device serving as a virtual master controls to determine common tones that can be used and the common numbers of bits that can be commonly used for the tones, thereby making it possible to easily achieve N-to-N communications in the high-speed mode.

In the present embodiment, an explanation will be given of the operation of a case in which, in the operation of the first embodiment, there is an error occurring in the high-speed communication between slaves, that is, data from the communication device on the sender side is not received by the communication device on the receiver side . This error occurs when the distance between the communication devices is greatly longer than the distance to the communication device serving as a master.

In such a case, in the present embodiment, the communication at the high-speed mode is continued in the following method. Fig. 7 is a flow chart that shows the communication method of a second embodiment. For example, the first slave device executes data communication with the second slave device at a transfer rate determined by the virtual master in the high-speed mode (step S31) as described in the first embodiment, and as a result, if the second slave device fails to receive the data, that is, if no response is transmitted from the second slave apparatus, the first slave device informs the virtual master device of the NG state in communication with the second slave device (step S32). Then, in such a case, the virtual master serves as a repeater so that it sends the data from the first slave device to the second slave device (step S33, step S34) (see Fig. 7(a)).

Here, in the present embodiment, not limited to the above-mentioned communication method, for example, if the virtual master device is allowed to always monitor the transmission path 7, then it becomes easier to recognize the OK/NG state in data communications between the slave devices; thus, as shown in Fig. 7(b), the processes in the above-mentioned steps S32 and S33 are simplified.

In this manner, in the present embodiment, the same effects as the first embodiment are obtained, and at the time of the high-speed mode, even when the data communication between the communication devices serving as slaves results in the NG, the communication device serving as a virtual master becomes the repeater so that it is possible to continue the data communication in the high-speed mode.

In the present embodiment, an explanation will be given of another operation different from the operation of the second embodiment, that is applied to a case in which, in the operation of the first embodiment, there is an error occurring in the high-speed communication between slaves, that is, data from the communication device on the sender side is not received by the communication device on the receiver side. In the same manner as the second embodiment this error occurs when the distance between the communication devices is greatly longer than the distance to the communication device serving as a master.

In such a case, in the present embodiment, the communication at the high-speed mode is continued in the following method. Fig. 8 is a flow chart that shows the communication method of a third embodiment. For example, the first slave device executes data communication with the second slave device at a transfer rate determined by the virtual master in the high-speed mode (step S51) as described in the first embodiment, and as a result, if the second slave device fails to receive the data, that is, if no response is transmitted from the second slave apparatus, the first slave device informs the virtual master device that it will next serve as a master (step S52), and the virtual master device makes a response to the information that it will transfer the role of the virtual master (step S53). Then, the communication device, which has newly become a virtual master, carries out re-training on all the slave devices (step S54) in the same manner as the first embodiment, determines an optimal transfer rate by executing the aforementioned mapping process, and simultaneously give the mapping information to all the slave devices (step S55). In this state, it re-tries the communication that first resulted in the NG.

In this manner, in the present embodiment, the same effects as the first embodiment are obtained, and at the time of the high-speed mode, even when the data communication between the communication devices serving as slaves results in the NG, the communication device to serve as a virtual master is switched to the former slave communication device that was the sender of the communication that resulted in the NG so that it is possible to continue the data communication in the high-speed mode. Moreover, when the communication method in the present embodiment is executed repeatedly including the state (transfer rate) at the time of the occurrence of the NG, it becomes possible to finally carry out training on all the communication devices, and consequently to provide a high-speed communication that is free from the NG caused due to differences in the distance.

As described above, in the communication method of the present invention, by using the multi-carrier modem system, it is possible to improve a noise resistant property, toprovide high-speeds in the transfer rate (high-speed mode), and also to properly alter communication modes (high-speed mode/low-speed mode) in accordance with the state of the transmission path and the other communication side, and at the time of application of power, the present invention also allows communication devices connected to the transmission path to operate either a virtual master or a slave so that the communication device serving as a virtual master controls to determine common tones that can be used and the common numbers of bits that can be commonly used for the tones, thereby making it possible to easily achieve N-to-N communications in the high-speed mode.

Furthermore, in the communication method, at the time of the high-speed mode, even when there is an error in data communication between the communication devices serving as slaves, the communication device which has become a virtual master is allowed to relay the data so that it is possible to continue the data communication at the high-speed mode.

Furthermore, in the communication method, at the time of the high-speed mode, even when there is an error in data communication between the communication devices serving as slaves, the communication device to serve as a virtual master is switched to the former slave communication device that was the sender of the communication that resulted in the error so that it is possible to continue the data communication in the high-speed mode.

As described above, in the communication device of the present invention, by using the multi-carrier modem system, it is possible to improve a noise resistant property, to provide high-speeds in the transfer rate (high-speed mode), and also to properly alter communication modes (high-speed mode/low-speed mode) in accordance with the state of the transmission path and the other communication side, and at the time of application of power, the present invention also allows communication devices connected to the transmission path to operate either a virtual master or a slave so that the communication device serving as a virtual master controls to determine common tones that can be used and the common numbers of bits that can be commonly used for the tones, thereby making it possible to easily achieve N-to-N communications in the high-speed mode.

Furthermore, in the communication device, at the time of the high-speed mode, even when there is an error in data communication between the communication devices serving as slaves, the communication device which has become a virtual master is allowed to relay the data so that it is possible to continue the data communication at the high-speed mode.

Furthermore, in the communication device, at the time of the high-speed mode, even when there is an error in data communication between the communication devices serving as slaves, the communication device to serve as a virtual master is switched to the former slave communication device that was the sender of the communication that resulted in the error so that it is possible to continue the data communication in the high-speed mode.

### INDUSTRIAL APPLICABILITY

As described above, a method of and device for communication of the present invention are suitable for achieving data communication through the existing power lines by using a method such as the DMT (Discrete Multi Tone) modem system and the OFDM (Orthogonal Frequency Division Multiplex) modem system. Moreover, not limited to the communication device for carrying out power line communication through the DMT modem system, the method and device are suitably applicable to any communication device for carrying out cable communication and radio communication through normal communication lines by using the multi-carrier modem system and a single carrier modem system.

## Claims

1. A communication method, which uses a multi-carrier modem systemas the communication system, and properly alters communication modes to a high-speed mode or a low-speed mode in accordance with the condition of the communication path and the communication destination, comprising the steps of:
a transfer rate determining step of allowing a specific communication device functioning as a virtual master at the high-speed mode to carry out one-to-one training with a communication device that operates as a slave so that all the carriers that can be used in data communication and the number of bits that can be assigned to each carrier are determined as information related to the transfer rate, and then determining the information related to the transfer rate individually by carrying out training in succession with all the other communication devices serving as slaves;
a mapping information determining step of allowing the specific communication device serving as the virtual master to determine a common carrier that can be used in the respective communication devices and the number of common bits that can be assigned to the respective carriers as mapping information based upon the results obtained from the individual training processes; and
a simultaneous informing step of giving the mapping information to all the communication devices simultaneously, and in this arrangement, all the communication devices connected to transmission paths operate at the high-speed mode based upon the mapping information.

2. The communication method according to claim 1, wherein, at the time of the high-speed mode in data communication between the communication devices serving as the slaves, when any communication device on the receiving side fails to receive data, the specific communication device serving as the virtual master relays the data to transmit the data to the communication device on the receiving side.

3. The communication method according to claim 1, wherein, at the time of the high-speed mode in data communication between the communication devices serving as the slaves, when any communication device on the receiving side fails to receive data, instead of the specific communication device serving as the virtual master, the communication device on the sending side serves as a virtual master, and the communication device, which newly serves as the master device, executes the above-mentioned steps, and then again transmits the data that has not been received.

4. A communication device, which uses a multi-carrier modem system as the communication system, and properly alters communication modes to a high-speed mode or a low-speed mode in accordance with the condition of the communication path and the communication destination,
when it is allowed to serve as a specific communication device functioning as a virtual master at the high-speed mode;
carries out one-to-one training with a communication device that operates as a slave so that it determines all the carriers that can be used in data communication and the number of bits that can be assigned to each carrier as information related to the transfer rate; then carries out training in succession with all the other communication devices serving as the slave with respect to the information related to the transfer rate;
determines the commonly-used carrier among the communication devices and the commonly-used number of bits that can be assigned to each carrier as mapping information based upon the results obtained from the individual training; and
simultaneously gives the mapping information to all the communication devices.

5. The communication device according to claim 4, wherein, at the time of high-speed mode, in data communication between communication devices serving as slaves, if any communication device on the receiving side fails to receive data, the data is relayed and transmitted to the communication device on the receiving side.

6. The communication device according to claim 4, wherein, at the time of high speed mode, in data communication between communication devices serving as slaves, when any communication device on the receiving side fails to receive data, the communication device on the sending side serves as a virtual master, and the communication device, which newly serves as the master device, executes the above-mentioned steps, and then again transmits the data that has not been received.
